# EUROPÄISCHE PATENTSCHRIFT

(11) **EP 1 341 849 B1**
(45) Veröffentlichungstag und Bekanntmachung des Hinweises auf die Patenterteilung: **08.10.2008**
(21) Anmeldenummer: 01982488.7
(22) Anmeldetag: 15.11.2001
(51) Int. Cl.: C08L 77/06, C08L 77/00

(54) **POLYAMID-FORMMASSEN MIT VERBESSERTEN EIGENSCHAFTEN**
POLYAMIDE MOULDING MATERIAL WITH IMPROVED PROPERTIES
MATÉRIAU À BASE DE POLYAMIDE DESTINÉ AU MOULAGE PRÉSENTANT DES PROPRIÉTÉS AMÉLIORÉES

(30) Priorität: 20.11.2000 DE 10057455
(43) Veröffentlichungstag der Anmeldung: 10.09.2003
(73) Patentinhaber: EMS-Chemie AG, 7013 Domat/Ems (CH)
(72) Erfinder: BÜHLER, Friedrich, Severin, CH-7430 Thusis (CH); SCHWITZER, Alwin, Hermann, CH-7013 Domat/Ems (CH)
(74) Vertreter: Becker Kurig Straus
(86) Internationale Anmeldenummer: PCT/EP2001/013237
(87) Internationale Veröffentlichungsnummer: WO 2002/040591

(56) Entgegenhaltungen:
- EP-A- 0 532 963
- EP-A- 0 728 812
- EP-A- 0 934 979
- EP-A- 0 957 131

## Beschreibung

Die Erfindung betrifft unverstärkte und verstärkte Polyamidformmassen mit verbessertem Verarbeitungsverhalten, erhöhter Fließfähigkeit verbesserter Oberflächenqualität und verbesserten mechanischen Eigenschaften insbesondere im konditionierten Zustand. Die erfindungsgemäße Formmasse eignet sich zur Herstellung von Formkörpern, insbesondere mit großen Wandstärken oder anderen Halbzeugen oder Fertigteilen, die z.B. durch Extrusion, Extrusionsblasformen, Extrusionsstreckblasformen, Pultrusion, Spritzguß, Mikrospritzguß, Gasinnendruck (GIT)-Spritzguß Spritzblasen, oder anderen Verformungstechniken herstellbar sind.

Verstärkte Polyamid-Blends spielen eine zunehmende Rolle im Bereich der technischen Konstruktionswerkstoffe, die neben hoher Steifigkeit, Zähigkeit und Wärmeformbeständigkeit für Einsätze im Sichtbereich eine optimale Oberflächenqualität zeigen müssen. Einsatzgebiete sind Innen- und Außenteile im Automobilsektor und im Bereich von anderen Transportmitteln, Gehäusematerial für Geräte und Apparate für die Telekommunikation, Unterhaltungselektronik, Haushaltsapparate, Maschinenbau, Heizungsbereich und Befestigungsteile für Installationen. Außenteile, die der Bewitterung ausgesetzt sind, benötigen zusätzlich eine entsprechende Stabilität, um mehrere Jahre die notwendige Funktion zu gewährleisten.

Der besondere Vorteil von verstärkten Polyamiden liegt im außergewöhnlich guten Verbund zwischen Polymermatrix und Verstärkungsstoffen. Dadurch sind hohe Verstärkungsgrade, die zu hochsteifen Produkten führen möglich, die aufgrund der niederen Schmelzviskosität teilkristalliner Polyamide im Spritzgießverfahren noch gut verarbeitbar sind.

Im folgenden sollen unter Polyamiden solche Polymere verstanden werden, bei denen die Monomereinheiten überwiegen, d.h. bis zu mindestens ca. 60 %, durch Amidbindungen, d.h. mit CO-NH-Bindungen, miteinander verknüpft sind. Hier kommen folgende Polymere in Frage. Homo- und Copolymere, die sich von Dicarbonsäuren, Diaminen, Aminocarbonsäuren und/oder Lactamen herleiten. Als Polyamide mit aliphatischer Struktur seien z.B. Polyamid (PA) 6, PA 66 und PA 46 und deren Mischungen aufgeführt. Die Kennzeichnung der Polyamide entspricht internationaler Norm ISO 1874-1, wobei die erste Ziffer die C-Atomzahl des Ausgangsamins und die letzte Ziffer die C-Atomzahl der Dicarbonsäure angeben. Wird nur eine Zahl angegeben, so bedeutet dies, daß von einer Aminocarbonsäure bzw. deren Lactam ausgegangen wird (vgl. H. Domininghaus, Die Kunststoffe und ihre Eigenschaften, VDI-Verlag 1976, S. 272).

Bei Polyamiden vom AA-BB-Typ wird dabei das Diamin immer an erster Stelle aufgeführt. Zum Beispiel wird das Polyamid aus Hexamethylendiamin und Sebacinsäure als Polyamid 610 (PA 610), das Polyamid aus Caprolactam als PA 6 bezeichnet.

Für aromatische oder cycloaliphatische Monomere gibt es teilweise spezielle Buchstabenkombinationen, so beispielsweise T für Terephthalsäure, I für Isophthalsäure, MACM oder PACM für Bis(4-amino-3-methyl-cyclohexyl)methan bzw. Bis(4-aminocyclohexyl)methan.

Zur Charakterisierung von Copolyamiden werden die Komponenten in der Reihenfolge ihrer Mengenanteile durch Schrägstriche getrennt aufgeführt und die Mengenanteile in Klammern nachgestellt, z.B. Copolyamid 6/66/610 (50:30:20).

Das Zahlenmittel des Molekulargewichts der Polyamide sollte über 5000, vorzugsweise über 10.000 liegen.

Der Nachteil von unverstärkten oder verstärkten teilkristallinen Polyamidformmassen wie beispielsweise PA 66 liegt im starken Abfall der Steifigkeit durch Wasseraufnahme im Normklima. Verstärkte Polyamidformmassen (PA 66) führen aufgrund der hohen Schmelztemperatur und einer sehr hohen Kristallisationsgeschwindigkeit zu schlechten Oberflächen insbesondere bei Formteilen mit hoher Wandstärke.

Hohe Anteile an Verstärkungstoffen wie beispielsweise Glasfasern, in einer schnell erstarrenden PA 66 Polymermatrix, reduzieren die Fließfähigkeit beispielsweise bei der Spritzgießverarbeitung und führen zu reduzierter Oberflächenqualität. In diesen Fällen versucht man den Füllgrad niedrig zu halten und die Steifigkeit durch Verrippung zu erzielen.

Aus DE 17 69 040 OS sind unverstärkte Formmassen aus teilkristallinen aliphatischen Polyamiden und amorphen Copolyamiden bekannt, die im Extruder vermischt werden. Der Kristallisationsgrad im teilkristallinen Polyamid wird dadurch reduziert, so daß nahezu transparente Formteile herstellbar sind.

In DE 26 42 244 C2 wird darauf hingewiesen, daß verstärkte Formmassen durch Extrusion von amorphen Copolyamiden des Typs MACMI/12 mit teilkristallinen aliphatischen Polyamiden hergestellt werden können, wodurch die mechanischen Eigenschaften verändert werden.

EP 70001 B2 beschreibt unverstärkte und verstärkte Formassen auf der Basis teilkristalliner aliphatischer Polyamide und amorpher Polyamide, bestehend aus 40-98 Mol%-Einheiten Isopthalsäure, 2-60 Mol-%-Einheiten Terephthalsäure, 50-98 Mol-%-Einheiten Hexamethylendiamin und 2-50 Mol-%-Einheiten Bis-(p-aminocyclohexyl)-methan (PACM). Dadurch soll die Zähigkeit der Formmassen verbessert werden. Der Nachteil dieser Gemische besteht in der Gefahr, daß infolge von Phasenseparation Inhomogenitäten im Formkörper entstehen können.

Durch Zugabe von 30-95 Gew.-% amorpher Polyamide wie beispielsweise Hexamethylenisophthalamid PA 61 (DE 37 05 228 A1, EP 279 342 A1) zu verstärktem PA 66 werden verbesserte Fließeigenschaften in der Schmelze und erhöhte Reißdehnungen im Formteil gefunden. Gleichzeitig wird eine Verbesserung der Oberflächenqualität (DE 32 00 428 C2) erzielt. Der Nachteil dieser Gemische besteht in der Gefahr, daß infolge von Phasentrennung Inhomogenitäten im Formkörper entstehen können. Ferner nimmt die Wärmeformbeständigkeit mit zunehmendem Anteil an PA 6I ab. Bei abnehmendem Anteil PA 6I nimmt die Differenz der Steifigkeiten im trocken und konditionierten Zustand wieder zu.

EP 1010 726 A1 beschreibt verstärkte Polyamid Formmassen auf Basis von PA 66/6I Copolymer mit 70-95 Gew.-% teilkristallinen PA 66 Einheiten und 30-5 % amorphen PA 6I Einheiten mit speziellen Glasfasern von 15 bis 30 µm Durchmesser und Aspect-Verhältnissen von 9 bis 18. Besonders hohe Oberflächenqualitäten im Formteil sollen dann entstehen, wenn die Kristallisationstemperatur unter 210°C liegt. In unseren Vergleichsbeispielen VB9 bis VB12 konnte gezeigt werden, daß die Oberfläche weniger durch die Kristallisationstemperatur beeinflußt wird als durch die Viskosität des Compounds. Trotz hoher Füllgrade mit 60 Gew.-% Glasfaser werden in EP 1010 726 relativ niedrige Steifigkeiten erzielt. Ein deutlicher Nachteil dieser Produkte besteht im starken Abfall der Steifigkeit nach Wasseraufnahme.

EP 400 428 A1 handelt von Formmassen aus teilkristallinen, teilaromatischen Copolyamiden (6T/6), die mit amorphen Copolyamiden (6I/6T: 60/40 Gew.-%) extrudiert werden. Der Vorteil dieser Formmassen besteht in der verbesserten Zähigkeit gegenüber reinem COPA 6T/6 und PA 66. Die CoPA 6T/6 liegen im Schmelzbereich oberhalb PA 66 und erfordern entsprechend hohe Verarbeitungstemperaturen und Formtemperaturen.

EP 0 934 979 A3 beschreibt eine Polyamidzusammensetzung, die ein kristallines, teilaromatisches Copolyamid mit nur einer Art aromatischer Monomer-Einheiten wie Terephthalsäure oder Isophthalsäure (50 - 95 Gew.-%) sowie ein kristallines, teilaromatisches Copolyamid mit mindestens zwei Arten aromatischer Monomer-Einheiten und ein nicht-kristallines teilaromatisches Polyamid (5 - 50 Gew.-%) enthält. Die Formmassen zeigen ein gutes Fließverhalten und hohe Wärmeformbeständigkeit.

Ausgezeichnete Oberflächenqualitäten bei hohen Füllgraden (DE 43 21 247 C2) werden erhalten, wenn aus den Bausteinen eines teilkristallinen Polyamids wie PA 66 (70-95 Gew.-%) und einem amorphen Polyamid wie PA 6I (5-30 Gew.%), ein Copolymerisat hergestellt wird, wie beispielsweise ein PA 66/6I. Diese Produkte sind stabil gegenüber Entmischung, da keine unverträglichen Blendkomponenten existieren. Die Konstanz der mechanischen Eigenschaften im trockenen und konditionierten Zustand ist unbefriedigend. Nachteilig wirkt sich die Absenkung des Schmelzpunktes auf die Wärmeformbeständigkeit, auch HDT (Heat Distortion Temperature) genannt, aus.

Verbesserte Fließfähigkeiten ohne negativen Einfluß auf die Zähigkeit, Steifigkeit und Wärmeformbeständigkeit können durch Zugabe von 4-8 % eines PA-Präpolymeren bezogen auf den Anteil der Polymermatrix erhalten werden (DE 198 21 719A1). Als PA-Präpolymeres wird ein teilaromatisches PA des Typs 6T/6I der Zusammensetzung 70/30 Gew.-% mit relativen Viskositäten gemessen in 0,5 %iger m-Kresollösung von 1,01 bis 1,3 zu einer Polymermatrix aus PA 66, PA 66+PA 6I/6T (Blend) oder PA 12 eingesetzt. Trotz hoher Füllgrade von 50-70 % Glasfasern können die Fließlängen und Oberflächen der Formteile stark verbessert werden. Der Nachteil dieser Gemische besteht wieder in der Gefahr, daß infolge von Phasenseparation Inhomogenitäten im Formkörper entstehen können. Ferner zeigen Blends beispielsweise auf Basis PA 66 mit PA-Präpolymer noch starke Differenzen in der Steifigkeit im trockenen und konditionierten Zustand.

EP 0 272 695 B2 beschreibt mehrphasige thermoplastische Mischungen, umfassend:
a) 60-90 Gew.-% einer Polyamidmatrix, wobei wenigstens 50 Gew.-% der Polyamidmatrix aus aliphatischen Bausteinen aufgebaut ist, wobei das zahlendurchschnittliche Molekulargewicht des Polyamids bzw. der Polyamide in der Matrix zwischen 3000 und 8000 liegt, und wobei die Polyamidmatrix eine Summe von unausgewogenen Endgruppen und jeglichen verkappten Endgruppen von wenigstens 200 Äquivalenten pro 10⁶ Gramm Polyamid aufweist, oder wobei das Endgruppenungleichgewicht wenigstens 1,9/1 oder mehr beträgt und die Summe der genannten Endgruppen größer als 100 ist, und
b) komplementär dazu 10-40 Gew.-% wenigstens eines organischen polymeren Schlagzähmodifikator mit einem Zugmodul (ASTM D-882, 50 % relative Feuchtigkeit) unterhalb 10.000 psi, oder bei einer Mischung von Schlagzähmodifikatoren mit einem durchschnittlichen Modul unterhalb 10.000, und einer zahlendurchschnittlichen Teilchengröße von weniger als 1000 Nanometern,
und wobei die Mischung eine Izod-Kerbschlagzähigkeit (ASTM D-256-56, durchschnittliche Werte von drei Teststäben, gemessen an jedem Ende) von mehr als 2 ft. Ibs inch aufweist, und darüber hinaus eine solche Zugfestigkeit (ASTM D-638-585) und einen solchen Schmelzfluß (ASTM D-1238-73 bei 280°C und einer Last von 2160 g) besitzt, daß das Produkt aus Izod-Kerbschlagzähigkeit in ft. Ib inch, Zugfestigkeit in 1000 pounds in² und Fluß in g/10 Minuten mehr als 5000 beträgt, und wobei 0,5-15 Gew.-% der Polyamidmatrix auf den Zähigmacher aufgepfropft oder in dem Zähigmacher eingeschlossen sind.

EP 0 272 695 B2 verweist zwar auf die Kombination von hoch und niedrigviskosen Polyamid-Typen zur Verbesserung der Fließeigenschaften, jedoch immer in Verbindung mit Schlagzähmodifikatoren. EP 0 272 695 B2 beschreibt allerdings nicht die Vorteile bei Verwendung von PA 66/6I/6T und PA 6I/6T-Polymeren zusammen mit niedrigviskosen Präpolymeren, die Schmelzpunkt, Glasübergangspunkt und Oberflächenqualität beeinflussen und die Differenz der Eigenschaften im trocknen und konditionierten Zustand minimiert.

Aufgabe der vorliegenden Erfindung ist es daher, Polyamidformmassen bereitzustellen, bei denen die Gefahr der Entmischung einzelner Komponenten nicht besteht. Die Formmassen sollen im trockenen wie im konditionierten Zustand möglichst geringe Differenzen in den mechanischen Eigenschaften - wie z.B. Zugfestigkeit, E-Modul und Schlagzähigkeit - zeigen und hohe Wärmeformbeständigkeiten besitzen. Gleichzeitig werden bei der Verarbeitung hohe Fließfähigkeiten gewünscht, damit hochsteife Formteile mit ausgezeichneter Oberflächenqualität hergestellt werden können.

Die Aufgabe wird durch die Polyamidformmassen gemäß Anspruch 1 sowie durch die Verwendung gemäß Anspruch 18 und die Formkörper gemäß Anspruch 19 gelöst.

In den Unteransprüchen sind vorteilhafte, aber nicht ausschließliche, Ausführungsformen der Erfindung enthalten.

Überraschenderweise wurde gefunden, daß durch Kombination von einem korrespondierenden Copolymer wie beispielsweise PA 66/6I/6T oder von PA 6/6I/6T und amorphes PA 6I/6T und PA-Präpolymer wie beispielsweise PA 6T/6I mit sehr niedriger Viskosität, Verbesserungen der Fließfähigkeit und der Oberflächenqualität möglich sind, ohne daß die Gefahr von Inhomogenitäten durch Entmischung der Blends im Formkörper besteht. Gleichzeitig kann durch geeignete Wahl der Komponenten HDT, Zähigkeit und Steifigkeit auf hohe Niveaus gebracht werden und der Einfluß der Wasseraufnahme beim Konditionieren reduziert werden.

Von besonderer Bedeutung ist dabei das Verhältnis von amorphem Anteil PA 6I/6T zum teilkristallinen Anteil PA 66 oder PA 6 im Copolymer sowie Aufbau und Viskosität des PA-Präpolymeren 6T/6I. Das Verhältnis PA 66 bzw. PA 6 zu PA 6I/6T im Copolyamid beeinflußt den Schmelzpunkt, die Schmelzenthalpie, die Kristallisationstemperatur, die Kristallisationsenthalpie, die Kristallisationsgeschwindigkeit und den Tg (Glasübergangstemperatur). Durch die Verwendung gleicher Monomerbausteine im korrespondierenden Copolymer, die im PA-Präpolymer PA 6T/6I und im amorphen PA 6I/6T und im teilkristallinen PA 66/6I/6T bzw. PA 6/6I/6T vorhanden sind, ergibt sich vermutlich eine der Kompatibilisierungswirkung gegenüber den reinen, nicht verträglichen teilkristallinen und amorphen Polyamidkomponenten.

Für ein PA-Präpolymer des Typs PA 6T/6I/66 oder des Typs PA 6T/6I/6 sind gleiche Vorteile in Bezug auf Verträglichkeit des Compounds zu erwarten. Über die Viskosität des Copolymeren kann die Zähigkeit gesteuert werden. Über die Zugabe von PA-Präpolymer wird die Fließlänge und die Oberflächenqualität angehoben und die Wasseraufnahme reduziert. Durch die Zugabe einer weiteren Komponente wie beispielsweise amorphes PA 6I/6T kann die Differenz der Steifigkeit im trockenen und konditionierten Zustand reduziert werden.

Das zwingend notwendige, teilverträgliche Präpolymer reduziert die Kristallisationsgeschwindigkeit der Matrix, ohne die Kristallisationsenthalpie der Matrix wesentlich zu beeinflußen. Dadurch kann die Fließfähigkeit der Schmelze erhöht und die Wärmeformbeständigkeit des Formteils auf hohem Niveau gehalten werden. Das PA-Präpolymer enthält vorzugsweise einen Anteil der Bausteine des Copolymers und besitzt eine niedere Viskosität und einen möglichst hohen Schmelzpunkt.

Gegenüber dem Copolymer PA 66/6I (DE 43 21 247 C2) bietet das Copolymer PA 66/6I/6T einen weiteren Vorteil, indem durch die Einstellung des Verhältnises 6T>6I Schmelzpunkt und HDT angehoben werden können, bei gleichzeitiger Steigerung des 6T/6I Anteils.

Durch den verbesserten Schmelzefluß, die verbesserte Komponentenverträglichkeit und die dadurch reduzierte Entmischungsgefahr, sowie die reduzierte Kristallisationsgeschwindigkeit und Wasseraufnahme sind optisch hochwertige Formteile in größeren Dimensionen herstellbar. Gleichzeitig bewirkt die verbesserte Komponentenverträglichkeit eine verringerte Neigung zu Düsenablagerungen und zu Delaminationen. Ein besonderer Vorteil der Produkte mit sehr glatten Oberflächen, hergestellt aus der erfindungsgemäßen Formasse, zeigt sich in einer ausgezeichneten Metallisierbarkeit nach galvanischen-, Kaschier- und Bedampfungsmethoden. Ferner entstehen hochwertige Produkte bei der Anwendung von Gas-Injektions (GIT) Verfahren.

Die Erfindung ist dadurch gekennzeichnet, daß ein korrespondierendes Copolyamid alle entsprechenden Komponenten des PA-Präpolymeren und der teilkristallinen und amorphen Polyamide enthält und dadurch eine kompatibilisierende Wirkung erzielt. Das Verhältnis der amorphen zu den teilkristallinen Einheiten kann in der erfindungsgemäßen Formmasse so eingestellt werden, daß möglichst hohe Wärmeformbeständigkeiten entstehen und im trockenen wie im konditionierten Zustand ähnliche Steifigkeiten erhalten werden.

Das besondere Merkmal der erfindungsgemäßen Formmasse besteht darin, daß neben dem PA-Präpolymeren immer korrespondierendes Copolyamid vorhanden ist, das gegenüber den amorphen oder teilkristallinen PA-Komponenten und dem PA-Präpolymeren kompatibilisierend wirkt, damit die Gefahr der Entmischung während der Verarbeitung reduziert ist.

Das zwingend notwendige teilverträgliche PA-Präpolymer reduziert die Kristallisationsgeschwindigkeit der Matrix, ohne die Kristallisationsenthalpie der Matrix wesentlich zu beeinflussen. Dadurch kann die Fließfähigkeit der Schmelze erhöht und die Wärmeformbeständigkeit des Formteils auf hohem Niveau gehalten werden. Durch den verbesserten Schmelzefluß, die verbesserte Komponentenverträglichkeit und die reduzierte Kristallisationsgeschwindigkeit sind optisch hochwertige Formteile in größeren Dimensionen herstellbar.

Die korrespondierenden Copolyamide bestehen aus den Komponenten der amorphen und/oder teilkristallinen Matrixpolymeren und den Komponenten des PA-Präpolymers. Besteht die Matrix des verstärkten PA-Blends beispielsweise aus PA 66 oder PA 6 und/oder einem amorphen 6I/6T Polyamid, dann eignen sich insbesondere Copolymere der Zusammensetzung PA 66/6I/6T oder PA 6/6I/6T, die vermutlich als Kompatibilisatoren wirken und zur Erhöhung der Fließfähigkeit beitragen. Das Verhältnis der Komponenten PA 66 zu PA 6I/6T beeinflußt die Oberflächenqualität des Formteils, die über den Glanzwert gemessen werden kann.

Beispielsweise wird für PA 66/6I/6T oder PA 6/6I/6T Copolymer mit 50 Gew.-% Glasfasern ein Glanz-Optimum für den Bereich der Zusammensetzung von 70/20/10 bis 90/7/3 Gew.-% gefunden.

In DE 43 21 247 C2 wurde beispielsweise für das PA 66/6I Copolymer ein Glanzoptimum für die Zusammensetzung 66:6I = 80:20 Gew.-% gefunden. Entscheidender Nachteil ist der starke Abfall des E-Moduls im konditionierten Zustand, ein niederer HDT-Wert und eine hohe Wasseraufnahme.

Die Matrix der erfindungsgemäßen Polyamidformmassen enthält mindestens 3 Komponenten: ein teilkristallines Copolyamid (A) mit der Zusammensetzung 66/6I/6T, ein PA-Präpolymer (B) mit der Zusammensetzung 6T/6I/66 oder 6T/6I/6 und ein amorphes Copolyamid (C) mit der Zusammensetzung 6I/6T. Die drei Komponenten (A), (B) und (C) sind folgendermaßen definiert:
(A) 42-98Gew.-% eines teilkristallinen Copolyamids aufgebaut aus
   (a₁) 47-90 Gew.-% Einheiten, welche von sich von Adipinsäure in Kombination mit Hexamethylendiamin in nahezu äquimolarem Verhältnis oder von Caprolactam und/oder von ω-Aminocarbonsäuren mit 6 C-Atomen ableiten,
   (a₂) 50-7 Gew.-% Einheiten, die sich von Isophthalsäure in Kombination mit Hexamethylendiamin in nahezu äquimolarem Verhältnis ableiten,
   (a₃) 40-3 Gew.-% Einheiten, die sich von Terephthalsäure in Kombination mit Hexamethylendiamin in nahezu äquimolarem Verhältnis ableiten,
   wobei die Gew.-% der Komponenten (a₁) bis (a₃) zusammen 100 % ergeben;
(B) 9-1 Gew.-% präpolymere Polyamide mit einer Lösungsviskosität (ηre1.) von 1,ob-1,30, gemessen 0,5 % in m-Kresol, aufgebaut aus
   (b₁) 40-90 Gew.-% Einheiten, welche sich von Terephthalsäure in Kombination mit Hexamethylendiamin in äquimolarem Verhältnis ableiten,
   (b₂) 50-10 Gew.-% Einheiten, welche sich von Isophthalsäure in Kombination mit Hexamethylendiamin in nahezu äquimolarem Verhältnis ableiten,
   (b₃) 0-50 Gew.-% Einheiten, welche sich von Adipinsäure in Kombination mit Hexamethylendiamin in nahezu äquimolarem Verhältnis oder von Caprolactam und/oder von ω-Aminocarbonsäuren mit 6 C-Atomen ableiten,
   wobei die Gew.-% der Komponenten (b₁) bis (b₃) zusammen 100 % ergeben,
(C) 49-1 Gew.-% eines amorphen Copolyamids, aufgebaut aus
   (c₁) 40-90 Gew.-% Einheiten, welche sich von Isophthalsäure in Kombination mit Hexamethylendiamin in äquimolarem Verhältnis ableiten,
   (c₂) 50-10 Gew.-% Einheiten, welche sich von Terephthalsäure in Kombination mit Hexamethylendiamin in äquimolarem Verhältnis ableiten,
   (c₃) 0-50 Gew.-% Einheiten, welche sich von Adipinsäure in Kombination mit Hexamethylendiamin in nahezu äquimolarem Verhältnis oder von Caprolactam und/oder von ω-Aminocarbonsäuren mit 6 C-Atomen ableiten,
wobei die Gew.-% der Komponenten (c₁) bis (c₃) zusammen 100 % ergeben.

Weiterhin kann die Gesamtformmasse zusätzlich 0-70 Gew.-% eines faser- oder teilchenförmigen Verstärkungs- und/oder Füllstoffes (D) oder Mischungen davon und 0-6 Gew.-% Ruß (E) enthalten. Die Komponenten (A) bis (F) ergeben dann zusammen 100 %.

Selbstverständlich können gegebenenfalls als weitere Komponenten (0 bis 30 Gew.-%) übliche Stabilisatoren, Gleitmittel, Farbstoffe, Metallflitter, Metallpigmente, gestanzte Metallflitter, Flammschutzmittel, Schlagzähmodifikatoren, Antistatika, Leitfähigkeitsadditive, Antibeschlagmittel, Entformungsmittel, optische Aufheller, Duftstoffe, Fungostatika zugesetzt werden (Komponente (F)).

Übliche Zusatzstoffe sind beispielsweise weiterhin auch Stabilisatoren und Oxidationsverzögerer, Mittel gegen Wärmezersetzung und Zersetzung durch UV-Licht, Gleit- und Entformungsmittel, Farbstoffe, Pigmente und Weichmacher. Oxidationsverzögerer und Wärmestabilisatoren, die den erfindungsgemäßen thermoplastischen Formmassen zugesetzt werden können, sind z.B. Halogenide von Metallen der Gruppe I des Periodensystems, z.B. Natrium-, Kalium-, Lithium-Halogenide, gegebenenfalls in Verbindung mit Kupfer(I)-Halogeniden.

Als Flammschutzmittel seien hier beispielsweise roter Phosphor, Polybromstyrole wie z.B. das Handelsprodukt Pyrocheck 68PB^{®} und die anderen für Polyamide bekannten Flammschutzmittel, wie Metallhydroxide, wie MgOH₂, Mg(CO₃)₂ benannt. Im Falle des Einsatzes von halogenhaltigen Flammschutzmitteln empfiehlt es sich, einen Synergisten zu verwenden. Geeignet sind Verbindungen des Antimon, Bor und Zinn. Diese werden im allgemeinen in Mengen von 0,5-10 Gew.-%, bezogen auf die thermoplastischen Massen, verwendet.

Als besonders wirksame Stabilisierung gegenüber Witterungseinflüsse kann eine Kombination von 0-6 Gew.-% Ruß mit 2-6 % Polyamid 12 eingesetzt werden. Als besonders wirksame Stabilisierung gegenüber Witterungseinflüssen kann eine Kombination von 0-6 Gew.-% Ruß, wie insbesondere Black Pearls 880^{®} der Firma Cabbot oder Corax N115^{®} der Firma Degussa mit 2-6 Gew.-% Polyamid 12 eingesetzt werden. Als PA 12-Produkte können beispielsweise Grilamid^{®} L16, Grilamid^{®} L18, Grilamid^{®} L20, Grilamid^{®} L22 und Grilamid^{®} L25 der Firma EMS-CHEMIE AG, Domat/Ems, Schweiz, eingesetzt werden.

Zur Herstellung der erfindungsgemäßen Formmassen können Ein- und vorzugsweise Zweiwellenextruder, die geeignete Förder- u. Knetelemente enthalten eingesetzt werden. Bevorzugt werden die Copolymeren, das PA-Präpolymer und gegebenenfalls das amorphe und oder das teilkristalline Polyamid mit den kleineren Additivmengen gemischt und in die Einzugszone des Extruders dosiert. Glasfasern werden über einen Sidefeeder, vorzugsweise möglichst nahe der Düse eingetragen.

Kommen weitere pulverförmige Additive zum Einsatz, werden entsprechende Mischungen entweder separat in die Einzugszone oder zwischen den Polymeren und der Glasfaser dosiert. Geeignete Massetemperaturen liegen je nach Schmelzpunkt der Polymeren zwischen 250 und 350°C. Wahlweise können einzelne Zusätze auch in der Form von geeigneten Masterbatch Granulaten oder als Kompaktate eingesetzt werden.

Die Herstellung der Formteile, Halbzeuge, Extrudate oder Hohlkörper erfolgt auf handelsüblichen Anlagen. Geeignete Verabeitungstemperaturen liegen zwischen 250 und 330°C. Wahlweise können Additive und einzelne Komponenten in der Form von geeigneten Masterbatch-Formulierungen direkt in der Verarbeitungsanlage zugegeben werden.

Das kristalline Copolymer (A) und das amorphe Polyamid (C) können geeignete Regler enthalten, die dem Fachmann bekannt sind, um die Viskosität im gewünschten Bereich zu begrenzen. Vorzugsweise werden Monoamine mit der folgenden allgemeinen Formel verwendet: CH₃-(R₁)-NH-(R₂)-CH₃,
worin R₁ und R₂ 0 bis 36 CH₂-Gruppen bedeuten, wobei die Monoamine aliphatischer, cycloaliphatischer oder verzweigter Natur sein können. Erfindungsgemäß bevorzugt eingesetzte Monoamine sind Stearylamin, Cyclohexylamin, Anilin, Propylamin und Nonylamin. Die Amine können in geringem Überschuß im Vergleich zur Säure, d.h. in einem Überschuß von 0,2 %, verwendet werden.

Das erfindungsgemäße Copolymer (A), das präpolymere Polyamid (B) und das amorphe Copolyamid (C) weisen insbesondere einen niedrigen Triamingehalt, insbesondere von weniger als 0,3 Gew.-% auf. Dies kann dadurch bewerkstelligt werden, daß man bei dem Herstellungsprozeß die Verweilzeiten sehr kurz und die Verfahrenstemperaturen relativ niedrig hält und so die Bildung von Triaminen weitgehend verhindert.

Als Monocarbonsäuren (Regler) werden Monocarbonsäuren mit der folgenden allgemeinen Formel eingesetzt: CH₃-(R₁)-COOH,
worin R₁ 0 bis 36 CH₂-Gruppen bedeutet und wobei die Monocarbonsäuren aliphatischer, cycloaliphatischer oder verzweigter Natur sein können. Vorzugsweise werden Essigsäure, Ameisensäure, Stearinsäure, Palmitinsäure, Cyclohexancarbonsäure eingesetzt. Alternativ kann auch eine gemischte Regelung aus Monoamin- und Monocarbonsäure verwendet werden.

Erfindungsgemäß besonders bevorzugt sind weiterhin Regler, wie 4-Amino-2,2,6,6-tetraalkylpiperidin oder 2,6 Dialkylphenole mit Methylamin oder Carboxylfunktionen oder Reglertypen, die ein oder mehrere dieser Gruppen enthalten.

Ferner können dem jeweiligen Polymerisationsansatz der Polymere (A) und (C) Verbindungen auf Basis von unterphosphoriger Säure, phosphoriger Säure oder Phosphorsäure oder Derivate der schwefeligen Säure, wie z.B. Sulfite, oder Thiosulfate, zugegeben werden, sowie geeignete Antioxidantien wie beispielsweise sterisch gehinderte Hydroxyphenole.

Weiterhin können geeignete Entschäumer auf der Basis von Siliconen und Siliconderivaten im Polymerisationsansatz eingesetzt werden. Bevorzugt in Form stabiler wässriger Emulsionen mit Kieselsäuren.

Eine weitere Variante besteht in der Zugabe von Schichtsilikaten wie beispielsweise Montmorillonit, Bentonit oder Glimmer, die in exfolierter Form im Endprodukt (Nanocomposites) vorliegen, bevorzugt mit hohen Aspect-Verhältnissen, die entweder während der Polymerisation des Copolymers oder direkt bei der Extrusion der Formmasse eingesetzt werden.

Wahlweise kann der Polymerisationsansatz geeignete Trenn- und Gleitmittel enthalten, wie beispielsweise Fettsäureester, Wachse oder Fettsäureamide.

Die relative Lösungsviskosität der Copolymeren (A), gemessen in 0,5 %iger m-Kresollösung liegt zwischen 1,4 und 1,9, bevorzugt zwischen 1,4 und 1,8, besonders bevorzugt zwischen 1,4 und 1,7.

Die Herstellung der Copolymeren (A) erfolgt nach bekannten Kondensationsverfahren für Polyamide nach dem Batch-Verfahren in Druckreaktoren. Nach erreichen der Zielviskosität wird das Polymer ausgetragen, im Wasserbad gekühlt, granuliert und getrocknet.

Die relative Viskosität der PA-Präpolymeren, Komponente (B) wird auf 1,01 bis 1,3 eingestellt, gemessen in 0,5 %iger m-Kresollösung, bevorzugt auf 1,05 bis 1,25 eingestellt. Die Herstellung der PA-Präpolymeren erfolgt nach dem Verfahren, das in DE 198 21 719 beschrieben wird.

Die Herstellung des amorphen Copolyamides, Komponente (C) erfolgt nach bekannten Kondensationsverfahren für Polyamide nach dem Batch-Verfahren in Druckreaktoren. Nach erreichen der Zielviskosität wird das Polymer ausgetragen, im Wasserbad gekühlt, granuliert und getrocknet.

Als Komponente (D) werden insbesondere 30-70 Gew.-%, bezogen auf die Formmasse, Füll- oder Verstärkungsstoffe wie Glasfasern, Glas-Rovings, Glaskugeln, Glaspulver, Polymerfasern, Kohlenstoffasern, Metallfasern, Mineralstoffe wie Quarz, Glimmer, Feldspat, Talkum, Kaolin, Wollastonit, bevorzugt mit geringer Partikelgröße, hoher Dispergierneigung und hohen Aspect-Verhältnissen (Länge zu Breite-Verhältnissen) verwendet. Selbstverständlich können auch Mischungen daraus oder entsprechende Masterbatches eingesetzt werden.

Die erfindungsgemäßen Formmassen werden zur Herstellung von Fasern, Hohlkörpern, Folien und Formkörpern verwendet. Die Formkörper werden aus den erfindungsgemäßen Formmassen nach den bekannten Verfahren zur Umformung von Polymerschmelzen durch Extrusion, Extrusionsblasformen, Extrusionsstreckblasformen, Putrusion, Spritzguß, Mikrospritzguß, Gasinnendrucktechnik (GIT)-Spritzguß, Spritzblasen oder anderen Verformungstechniken hergestellt.

Die mit den erfindungsgemäßen Formmassen hergestellten Formkörper werden zur Herstellung von Innen- und Außenteilen, vorzugsweise mit tragender oder mechanischer Funktion im Bereich Elektro, Möbel, Sport (wie z.B. Hockeyschläger, Skispitzenüberzüge), Bürostühle, Automobil und andere Transportmittel, Mikrobauteile und Platinen für den Elektrobereich, insbesondere im Bereich der Niederspannungstechnik oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Folgende Beispiele sollen die Erfindung erläutern ohne sie jedoch einzuschränken.

### Beispiele

### Herstellung der Copolymeren (A)

50 kg Monomermischung gemäß Tabelle 1 werden mit 15.1 Weichwasser bezogen auf den wasserfreien Ansatz in einen 1301-Autoklaven gegeben.
Danach wird der Autoklav geschlossen und unter Rühren innerhalb von 2 h auf 200°C aufgeheizt. Dabei entsteht ein Druck von 15-20 bar. Anschließend wird unter Rühren auf 280°C aufgeheizt und der Druck bei 20 bar konstant gehalten. Danach wird der Reaktor auf 1bar entspannt und unter Rühren noch ca. 1 h entgast, bis das Zieldrehmoment des Rührers erreicht wird. Die fertige Polymerschmelze wird ausgetragen, im Wasserbad gekühlt, granuliert und auf einen Wassergehalt < 0,05 % getrocknet.

**Tabelle 1: Copolymere 66/6I/6T, Komponente (A)**

| **Anteile** | | **C1** | **C2** | **C3** | **C4** | **C5** | **C6** | **C7** | **C8** | **C9** | **C10** | **C11** | **C12** | **C13** | **C14** | **C15** |
|---|---|---|---|---|---|---|---|---|---|---|---|---|---|---|---|---|
| 66 | Gew.-% | 70 | 73 | 83 | 89 | 70 | 73 | 83 | 89 | 70 | 75 | 80 | 75 | 75 | 73 | 73 |
| 61 | Gew.-% | 20 | 19 | 11 | 8 | 20 | 19 | 11 | 8 | 20 | 17 | 13 | 12,5 | 8 | 27 | 18 |
| 6T | Gew.-% | 10 | 8 | 6 | 3 | 10 | 8 | 6 | 3 | 10 | 8 | 7 | 12,5 | 17 | 0 | 9 |
| | | | | | | | | | | | | | | | | |
| **Eigenschaften** | Granul. | | | | | | | | | | | | | | | |
| r.V. 0,5% m-Kresol | | 1,82 | 1,81 | 1,60 | 1,60 | 1,88 | 1,84 | 1,79 | 1,80 | 1,583 | 1,883 | 1,874 | 1,896 | 1,864 | 1,42 | 1,61 |
| MVI/290° C/5 kg | ml/10 min | 79 | 119 | 635 | 630 | 36 | 53 | 99 | 147 | 361 | 54 | 81 | 71 | 61 | 2470 | 1080 |
| Tg | °C | 68 | 65 | 57 | 52 | 68 | 67 | 58 | 53 | 67 | 64 | 61 | 64 | 64 | 64 | 64 |
| Schmelztemperatur | °C | 234 | 237 | 250 | 253 | 235 | 238 | 248 | 253 | 237 | 242 | 246 | 247 | 253 | 227 | 239 |

| | | | | | | | | | | | | | | | | |
|---|---|---|---|---|---|---|---|---|---|---|---|---|---|---|---|---|
| r.V. = relative Viskosität; MVI = Melt Viscosity Index; min = Minuten Tg = Glasübergangstemperatur Granul. = Granulat | | | | | | | | | | | | | | | | |

Die Herstellung des PA-Präpolymers 6T/6I, Komponente (B) erfolgt nach dem Verfahren gemäß DE19821719. Der Gewichtsanteil der 6T Komponente beträgt 70 % und der 6I Komponente 30 %. Die relative Viskostät, gemessen in 0,5 % m-Kresol beträgt 1,13.

Als Komponente (C) wird das amorphe Copolyamid 6I/6T (Grivory^{®} G21) der Fa. Ems-Chemie AG eingesetzt, bestehend aus 66,6 Gew.-% 6I-Einheiten und 33,4 Gew.-% 6T-Einheiten. Die relative Viskosität, gemessen in 0,5 % m-Kresol liegt bei 1,5.

### Vergleichsbeispiele 1 bis 4: Verstärkte PA-Blends

Die Formmassen der Zusammensetzung in Tabelle 2 werden auf einen Zweiwellenextruder der Fa. Werner u. Pfleiderer Typ ZSK25 hergestellt. Die Granulate PA 66 und PA 6I/6T oder PA 6I wird mit Masterbatch-Granulat PA 66+Ruß (73/27Gew.%) vermischt und in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 upm wurden 8 kg Durchsatz verwendet. Nach Abkühlen der Stränge im Wasserbad wurden nach Granulierung und Trocknung bei 120°C die Granulateigenschaften gemessen.

Die Prüfkörper wurden auf einer Arburg Spritzgießanlage hergestellt, wobei die Zylindertemperaturen von 275 bis 290°C und eine Schneckendrehzahl von 250 upm eingestellt wurden. Die Formtemperatur wurde mit 100°C gewählt.

**Tabelle 2**

| **Rezeptur** | **Bedingung** | **Beispiel** | **VB1** | **VB2** | **VB3** | **VB4** |
|---|---|---|---|---|---|---|
| | | Einheit | | | | |
| **Rezeptur Compound** | | | | | | |
| PA 6I/6T. 67/33Gew.% | r.V. 1,50/0.5%m-Kr | Gew.-% | 19,6 | 12,4 | | |
| PA 6I: | r.V. 2,5/1.0%m-Kr | Gew.-% | | | 12,4 | 9,9 |
| PA 66 Radipol^{®} A45* | Handelsprodukt | Gew.-% | 30 | 37,2 | 37,2 | 39,7 |
| Ruß | | Gew.-% | 0,4 | 0,4 | 0,4 | 0,4 |
| Glasfasern | | Gew.-% | 50 | 50 | 50 | 50 |
| | | | | | | |
| **Eigenschaften Compound** | | | | | | |
| Einheiten 66/61/6T | Zusammensetzung | Gew.-% | 60/27/13 | 75/17/8 | 75/25/0 | 80/20/0 |
| r.V. Compound | | 0,5 %m-Kr | 1,709 | 1,773 | 1,802 | 1,812 |
| MVI-Compound | 290°C/5kg | ml/10 min | 24 | 12 | 12 | 18 |
| | | | | | | |
| **Eigenschaften Compound** | Granulat | | | | | |
| Glasumwandlungspunkt | Tg | °C | 72 | 73 | 79 | 71 |
| Schmelztemperatur | Tm | °C | 259 | 260 | 262 | 260 |
| Schmelzenthalpie | DHm | J/g | 22 | 29 | 27 | 26 |
| Kristallisationstemperatur | Tc | °C | 221 | 226 | 233 | 234 |
| Kristallisationsenthalpie | dHc | J/g | 19 | 23 | 20 | 21 |
| Kristallisationeschwindigkeit | dHm/dT | J/g/min | 12 | 14 | 15 | 16 |
| | | | | | | |
| **Prüfkörperherstellung Spritzg.** | Drehz/MT/WT upm/° C/°C | | | | | |
| E-Modul | 250/290/100 | MPa | 16000 | 17000 | 17000 | 17000 |
| E-Modul, cond | 250/290/100 | MPa | 17000 | 16000 | 16000 | 16000 |
| Reißfestigkeit | 250/290/100 | MPa | 240 | 239 | 228 | 240 |
| Reißfestigkeit, cond | 250/290/100 | MPa | 205 | 216 | 202 | 199 |
| Reißdehnung . | 250/290/100 | % | 2,6 | 2,5 | 2,8 | 2,5 |
| Reißdehnung, cond | 250/290/100 | % | 2,5 | 3 | 3,1 | 3,1 |
| KSZ (Charpy) | 250/290/100 | kJ/m² | 1.5 | 12 | 13 | 13 |
| KSZ (Charpy), cond | 250/290/100 | kJ/m² | 13 | 12 | 12 | 14 |
| SZ (Charpy) | 250/290/100 | kJ/m² | 91 | 92 | 90 | 90 |
| SZ (Charpy), cond | 250/290/100 | kJ/m² | 86 | 78 | 81 | 87 |
| | | | | | | |
| HDT/A (1,8 MPa) | 250/290/100 | °C | 230 | 238 | 240 | 246 |
| HDT/C (8 MPa) | 250/290/100 | °C | 120 | 167 | 148 | 176 |
| | | | | | | |
| Fließlänge 1.5X10mm | 1250/290/100 | mm | 185 | 170 | 162 | 180 |
| | | | | | | |
| WT/Farbplättchen/3mm | 250/290/WT | °C | 100 | 100 | 100 | 100 |
| Glanz 20° | Farbplättchen | % | 28 | 25 | 17 | 15 |
| Glanz 60° | Farbplättchen | % | 70 | 62 | 50 | 49 |
| | | | | | | |
| Feuchteaufnahme | 2Wo/70°C/62%rF | 1% | 1,219 | 1,12 | 1,12 | 1,09 |

| | | | | | | |
|---|---|---|---|---|---|---|
| * Handelsprodukt der Fa. Radici (IT) MT = Massetemperatur WT = Werkzeugtemperatur RF = relative Feuchte Wo = Wochen Kr = Kresol | | | | | | |

### Vergleichsbeispiel 5 bis 8: Verstärkte Copolyamide

Die Formmassen gemäß Tabelle 3 werden auf einen Zweiwellenextruder der Fa. Werner u. Pfleiderer Typ ZSK25. hergestellt Copolyamid-Granulat und Masterbatch-Granulat PA66+Ruß (Black Pearls^{®} 880) (73/27 Gew.%) werden zuvor mit einem Anrollhilfsmittel (flüssiger Fettsäureester) 0,1 Gew.-% gemischt und in die Einzugszone des Extruders dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 upm wurden 8 kg Durchsatz verwendet. Nach Abkühlen der Stränge im Wasserbad wurden nach Granulierung und Trocknung bei 120°C die Granulateigenschaften gemessen.

Die Prüfkörper wurden auf einer Arburg Spritzgießanlage hergestellt, wobei die Zylindertemperaturen von 275 bis 290°C und eine Schneckendrehzahl von 250 upm eingestellt wurden. Die Formtemperatur wurde mit 100°C gewählt.

**Tabelle 3**

| **Rezeptur** | | **Beisp.** | **VB5** | **VB6** | **VB7** | **VB8** |
|---|---|---|---|---|---|---|
| Compound | Bedingung | Einheit | | | | |
| | | | | | | |
| Copolymer | | | C1 | C2 | C3 | C4 |
| Copolyamid 66/6I/6T | Zusammensetz. | Gew.% | 70/20/10 | 73/19/8 | 83/11/6 | 89/8/3 |
| r. V. Copolyamid | 0,5 % m-Kresol | | 1,82 | 1,81 | 1,6 | 1,6 |
| | | | | | | |
| **Rezeptur Compound** | | | | | | |
| Copolyamid 66/6I/6T | Siehe oben | Gew.-% | 48,5 | 48,5 | 48,5 | 48,5 |
| PA 66 Radipol^{®} A45 | Handelsprodukt | Gew.-% | 1,1 | 1,1 | 1,1 | 1,1 |
| Ruß | | Gew.-% | 0,4 | 0,4 | 0,4 | 0,4 |
| Glasfasern | | Gew.-% | 50 | 50 | 50 | 50 |
| | | | | | | |
| **Eigenschaften Compound** | | | | | | |
| Einheiten 66/6I/6T | Zusammensetzung | Gew.-% | 71/19/10 | 74/18/8 | 84/11/5 | 89/8/3 |
| r.V. Compound | | 0,5% m-Kr | 1,833 | 1,778 | 1,668 | 1,645 |
| MVI-Compound | 290° C/5 kg | ml/10 min | 12 | 29 | 92 | 107 |
| | | | | | | |
| **Eigenschaften Compound** | Granulat | | | | | |
| Glasumwandlungspunkt | Tg | °C | 67 | 65 | 57 | 55 |
| Schmelztemperatur | Tm | °C | 235 | 237 | 248 | 252 |
| Schmelzenthalpie | DHm | J/g | 23 | 24 | 27 | 28 |
| Kristallisationstemperatur | Tc | °C | 203 | 204 | 220 | 224 |
| Kristallisationsenthalpie | DHc | J/g | 16 | 18 | 22 | 22 |
| Kristallisationseschwindigkeit | dHm/dT | J/g/min | 7 | 9 | 10 | 11 |
| | | | | | | |
| **Prütkörperherstellung Spritzg.** | Drehz/MT/WT upm/°C/°C | | | | | |
| E-Modul | 250/290/100 | MPa | 17000 | 17000 | 18000 | 18000 |
| E-Modul, cond | 250/290/100 | MPa | 16000 | 15000 | 14000 | 14000 |
| Reißfestigkeit | 250/290/100 | MPa | 228 | 234 | 246 | 250 |
| Reißfestigkeit, cond | 250/290/100 | MPa | 168 | 168 | 172 | 170 |
| Reißdehnung | 250/290/100 | % | 2,4 | 2,5 | 2,4 | 2,4 |
| Reißdehnung, cond | 250/290/100 | % | 3,2 | 3,1 | 3 | 3 |
| KSZ (Charpy) | 250/290/100 | kJ/m² | 14 | 13 | 13 | 13 |
| KSZ (Charpy), cond | 250/290/100 | kJ/m² | 13 | 13 | 13 | 13 |
| SZ (Charpy) | 250/290/100 | kJ/mp² | 100 | 100 | 83 | 91 |
| SZ (Charpy), cond | 250/290/100 | kJ/m² | 74 | 72 | 75 | 77 |
| | | | | | | |
| HDT/A (1,8 MPa) | 250/290/100 | °C | 216 | 219 | 239 | 245 |
| HDT/C (8 MPa) | 250/290/100 | °C | 147 | 169 | 209 | 216 |
| | | | | | | |
| Fließlänge 1,5X10mm | 250/290/80 | mm | 158 | 174 | 258 | 257 |
| Fließlänge 1,5X10mm | 250/290/100 | mm | | | | |
| | | | | | | |
| WT/Farbplättchen/3mm | 250/290/WT | °C | 100 | 100 | 100 | 100 |
| Glanz 20° | Farbplättchen | % | 27 | 29 | 35 | 28 |
| Glanz 60° | Farbplättchen | % | 66 | 62 | 71 | 66 |
| | | | | | | |
| Feuchteaufnahme | 2Wo/70°C/62%rF | % | 1,38 | 1,43 | 1,38 | 1,43 |

### Vergleichsbeispiel 9 bis 12: Verstärkte Copolyamide mit PA-Präpolymer

Herstellung der verstärkten Copolyamide mit PA-Präpolymer erfolgt nach den Rezepturen in Tabelle 4. Die Formmassen werden auf einen Zweiwellenextruder der Fa. Werner u. Pfleiderer Typ ZSK25 hergestellt. Copolyamid, PA-Präpolymer und Masterbatch-Granulat PA 66+Ruß (Black Pearls^{®} 880) (73/27 Gew.-%) werden zuvor mit einem Anrollhilfsmittel (flüssiger Fettsäureester) 0,1 Gew.-% gemischt und in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280° C eingestellt. Bei 150 upm wurden 8 kg Durchsatz verwendet. Nach Abkühlen der Stränge im Wasserbad wurden nach Granulierung und Trocknung bei 120°C die Granulateigenschaften gemessen.

Die Prüfkörper wurden auf einer Arburg Spritzgießanlage hergestellt, wobei die Zylindertemperaturen von 275 bis 290°C und eine Schneckendrehzahl von 250 upm eingestellt wurden. Die Formtemperatur wurde mit 100°C gewählt.

**Tabelle 4**

| **Rezeptur** | | **Beisp.** | **VB9** | **VB10** | **VB11** | **VB12** |
|---|---|---|---|---|---|---|
| | Bedingung | Einheit | | | | |
| | | | | | | |
| **Copolymer** | | | C5 | C6 | C7 | C8 |
| Copolyamid 66/6I/6T | Zusammensetz. | Gew.-% | 70/20/10 | 73/19/8 | 83/11/6 | 89/8/3 |
| r. V. Copolyamid | 0,5% m-Kr | | 1,82 | 1,81 | 1,6 | 1,6 |
| | | | | | | |
| **Rezeptur Compound** | | | | | | |
| Copolyamid 66/6I/6T | siehe oben | Gew.-% | 44,5 | 44,5 | 44,5 | 44,5 |
| PA-Präpolymer:6T/6I:70/30 | r.V. 1.13/0,5 % mKr | Gew.-% | 4 | 4 | 4 | 4 |
| PA 66 Radipol^{®} A45 | Handelsprodukt | Gew.-% | 1,1 | 1,1 | 1,1 | 1,1 |
| Ruß | | Gew.-% | 0,4 | 0,4 | 0,4 | 0,4 |
| Glasfasern | | Gew.-% | 50 | 50 | 50 | 50 |
| **Eigenschaften Compound** | | | | | | |
| Einheiten 66/6I/6T | Zusammensetz. | Gew.-% | 71/19/10 | 74/18/8 | 84/11/5 | 89/8/3 |
| r.V. Compound | | 0.5 % m-Cr | 1,641 | 1,611 | 1,515 | 1,512 |
| MVI-Compound | 290°C/5kg | ml/10 min | 25 | 36 | 73 | 98 |
| | | | | | | |
| **Eigenschaften Compound** | Granulat | | | | | |
| Glasumwandlungspunkt | Tg | °C | 71 | 72 | 67 | 65 |
| Schmelztemperatur | Tm | °C | 235 | 236 | 245 | 250 |
| Schmelzenthalpie | dHm | J/g | 23 | 24 | 26 | 28 |
| Kristallisationstemperatur | Tc | °C | 207 | 207 | 216 | 219 |
| Kristallisationsenthalpie | dHc | J/g | 14 | 16 | 17 | 18 |
| Kristallisationseschwindigkeit | dHm/dT | J/g/min | 5 | 6 | 9 | 7 |
| | | | | | | |
| **Priitkörperherstellung Spritzg.** | Drehz/MT/WT upm/°C/°C | | | | | |
| E-Modul | 250/290/100 | MPa | 17000 | 17000 | 18000 | 18000 |
| E-Modul, cond | 250/290/100 | MPa | 17000 | 16000 | 16000 | 16000 |
| Reißfestigkeit | 250/290/100 | MPa | 224 | 227 | 234 | 234 |
| Reißfestigkeit, cond | 250/290/100 | MPa | 186 | 188 | 192 | 190 |
| Reißdehnung | 250/290/100 | % | 2,4 | 2,3 | 2 | 2 |
| Reißdehnung, cond | 250/290/100 | % | 2,5 | 2,2 | 2,1 | 2,1 |
| ICSZ (Charpy) | 250/290/100 | KJ/m² | 11 1 | 11 | 12 | 12 |
| KSZ (Charpy), cond | 250/290/100 | KJ/m² | 11 | 11 | 11 | 11 |
| SZ (Charpy) | 250/290/100 | KJ/m² | 87 | 80 | 75 | 75 |
| SZ (Charpy), cond | 250/290/100 | KJ/m² | 74 | 73 | 71 | 70 |
| | | | | | | |
| HDT/A (1.8MPa) | 250/290/100 | °C | 215 | 219 | 234 | 241 |
| HDT/C (8MPa) | 250/290/100 | °C | 154 | 169 | 200 | 211 |
| | | | | | | |
| Fließlänge 1.5X10mm | 250/290/80 | mm | | | | |
| Fließlänge 1.5X10mm | 250/290/100 | mm | 210 | 228 | 326 | 346 |
| | | | | | | |
| WT/Farbplättchen/3mm | 250/290/WT | °C | 100 | 100 | 100 | 100 |
| Glanz 20° | Farbplättchen | % | 34 | 40 | 44 | 44 |
| Glanz 60° | Farbplättchen | % | 73 | 79 | 80 | 77 |
| | | | | | | |
| Feuchteaufnahme | 2Wo170°C/62%rF | % | 1,1 | 1,08 | 0,92 | 1,07 |

### Beispiel 13 bis 16: Verstärkte Copolyamide mit PA-Präpolymer und PA

Herstellung der verstärkten Copolyamide mit PA-Präpolymer und PA 66 oder PA 6I/6T erfolgt nach den Zusammensetzungen gemäß Tabelle 5.

Die Formmassen werden auf einen Zweiwellenextruder der Fa. Werner u. Pfleiderer Typ ZSK25 hergestellt. Copolyamid, PA 66 oder PA 6I/6T, PA-Präpolymer und Masterbatch-Granulat PA 66+RuB (Black Pearls^{®} 880) (73/27Gew.%) werden zuvor mit einem Anrollhilfsmittel (flüssiger Fettsäureester) 0,1 Gew.-% gemischt und in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 upm wurden 8 kg Durchsatz verwendet. Nach Abkühlen der Stränge im Wasserbad wurden nach Granulierung und Trocknung bei 120°C die Granulateigenschaften gemessen.

Die Prüfkörper wurden auf einer Arburg Spritzgießanlage hergestellt, wobei die Zylindertemperaturen von 275 bis 290°C und eine Schneckendrehzahl von 250 upm eingestellt wurden. Die Formtemperatur wurde mit 100°C gewählt.

**Tabelle 5**

| **Rezeptur** | | **Beisp.** | **B13** | **B14** | **B15** | **B16** |
|---|---|---|---|---|---|---|
| | Bedingung | Einheit | | | | |
| **Copolymer** | | | C5 | C6 | C7 | C8 |
| Copolyamid 66/61/6T | Zusammensetz. | Gew.-% | 70/20/10 | 73/19/8 | 83/11/6 | 89/8/3 |
| r. V. Copolyamid | 0,5% m-Kresol | | 1,88 | 1,844 | 1,793 | 1,795 |
| r. V. Copolyamid | 1%H2SO4(95,5%) | | 2,77 | 2,68 | 2,67 | 2,7 |
| | | | | | | |
| **Rezeptur Compound** | | | | | | |
| Copolyamid 66/6I/6T | siehe oben | Gew.-% | 38 | 42 | 40 | 37 |
| PA-Präpolymer:6T/6I:70/30 | r.V. 1.13/0.5%m-K | Gew.-% | 4 | 4 | 4 | 4 |
| PA 6I/6T: 67/33 Gew.-% | r.V.1.50/0.5%m-K | Gew.-% | | | 4,5 | 7,5 |
| PA 66 Radipol^{®} A45 | Handelsprodukt | Gew.-% | 7,6 | 3,6 | 1,1 | 1,1 |
| Ruß | | Gew.-% | 0,4 | 0,4 | 0,4 | 0,4 |
| Glasfasern | | Gew.-% | 50 | 50 | 50 | 50 |
| | | | | | | |
| **Eigenschaften Compound** | | | | | | |
| Einheiten 66/6I/6T | Zusammensetz. | Gew.-% | 75/17/8 | 75/17/8 | 75/17/8 | 75/17/8 |
| r.V. Compound | | 0,5% m-Cr | 1,651 | 1,628 | 1,61 | 1,58 |
| MVI-Compound | 290°C/5kg | MI/10 min | 18 | 29 | 58 | 56 |
| | | | | | | |
| **Eigenschaften Compound** | Granulat | | | | | |
| Glasumwandlungspunkt | Tg | °C | 69 | 68 | 66 | 66 |
| Schmelztemperatur | Tm | °C | 242 | 239 | 246 | 246 |
| Schmelzenthalpie | dHm | J/g | 21 | 23 | 24 | 24 |
| Kristallisationstemperatur | Tc | °C | 211 | 208 | 214 | 214 |
| Kristallisationsenthatpie | dHc | J/g | 14 | 14 | 17 | 18 |
| Kristallisationseschwindigkeit | dHm/dT | J/g/Min | 6 | 6 | 10 | 10 |
| | | | | | | |
| **Prüfkörperherstellung Spritzg.** | Drehz/MT/WT upm/°C/°C | | | | | |
| E-Modul | 250/290/100 | MPa | 17000 | 17000 | 17000 | 16000 |
| E-Modul, cond | 250/290/100 | MPa | 17000 | 17000 | 17000 | 16000 |
| Reißfestigkeit | 250/290/100 | MPa | 225 | 221 | 230 | 223 |
| Reißfestigkeit, cond | 250/290/100 | MPa | 192 | 190 | 196 | 185 |
| Reißdehnung | 250/290/100 | % | 2 | 2 | 2,3 | 2,1 |
| Reißdehnung, cond | 250/290/100 | % | 2,3 | 2,3 | 2,3 | 2,1 |
| KSZ (Charpy) | 250/290/100 | kJ/m² | 13 | 11 | 12 | 12 |
| KSZ (Charpy), cond | 250/290/100 | kJ/m² | 12 | 11 | 11 | 11 |
| SZ (Charpy) | 250/290/100 | kJ/m² | 85 | 73 | 88 | 81 |
| SZ (Charpy), cond | 250/290/100 | kJ/m² | 72 | 74 | 70 | 66 |
| | | | | | | |
| HDT/A (1,8 MPa) | 250/290/100 | °C | 223 | 222 | 228 | 231 |
| HDT/C (8 MPa) | 250/290/100 | °C | 170 | 174 | 184 | 182 |
| | | | | | | |
| Fließlänge 1,5X10 mm | 250/290/80 | mm | | | | |
| Fließlänge 1,5X10 mm | 250/290/100 | mm | 210 | 223 | 250 | 262 |
| | | | | | | |
| WT/Farbplättchen/3 mm | 250/290/6T | °C | 100 | 100 | 100 | 100 |
| Glanz 20° | Farbplättchen | % | 34 | 40 | 41 | 43 |
| Glanz 60° | Farbplättchen | % | 73 | 78 | 78 | 80 |
| | | | | | | |
| Feuchteaufnahme | 2Wo/70°C/62%rF | % | 1,07 | 1,09 | 1,05 | 1,05 |

### Vergleichsbeispiele und Beispiele 17 bis 43: Verstärkte Copolyamide, Einstellung der Viskosität

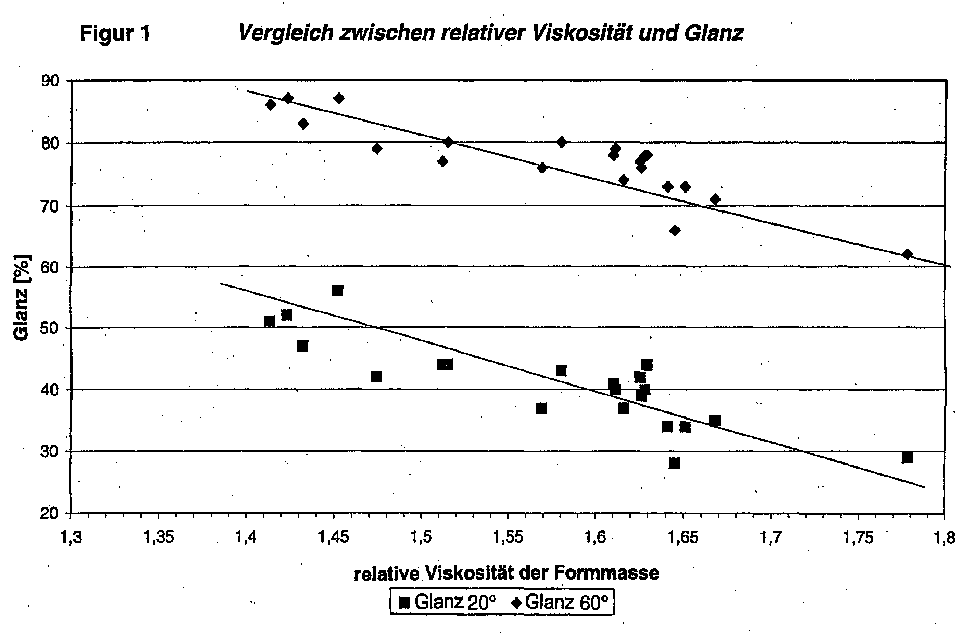

In den nachfolgenden Beispielen und in der nachfolgenden Figur 1 wird deutlich, daß die Viskosität des Compounds einen entscheidenden Einfluß auf die Oberflächenqualität des Formteils ausübt. Vorteilhafte Glanzwerte werden gefunden, wenn die relative Viskosität des Compounds, gemessen 0,5 % m-Kresol, unter 1,6 liegt. In den Vergleichsbeispielen VB32 bis VB35 ist zu erkennen, daß ein PA 66/6I/6T Copolymer etwas besser abscheidet als ein PA 66/6I Copolymer.

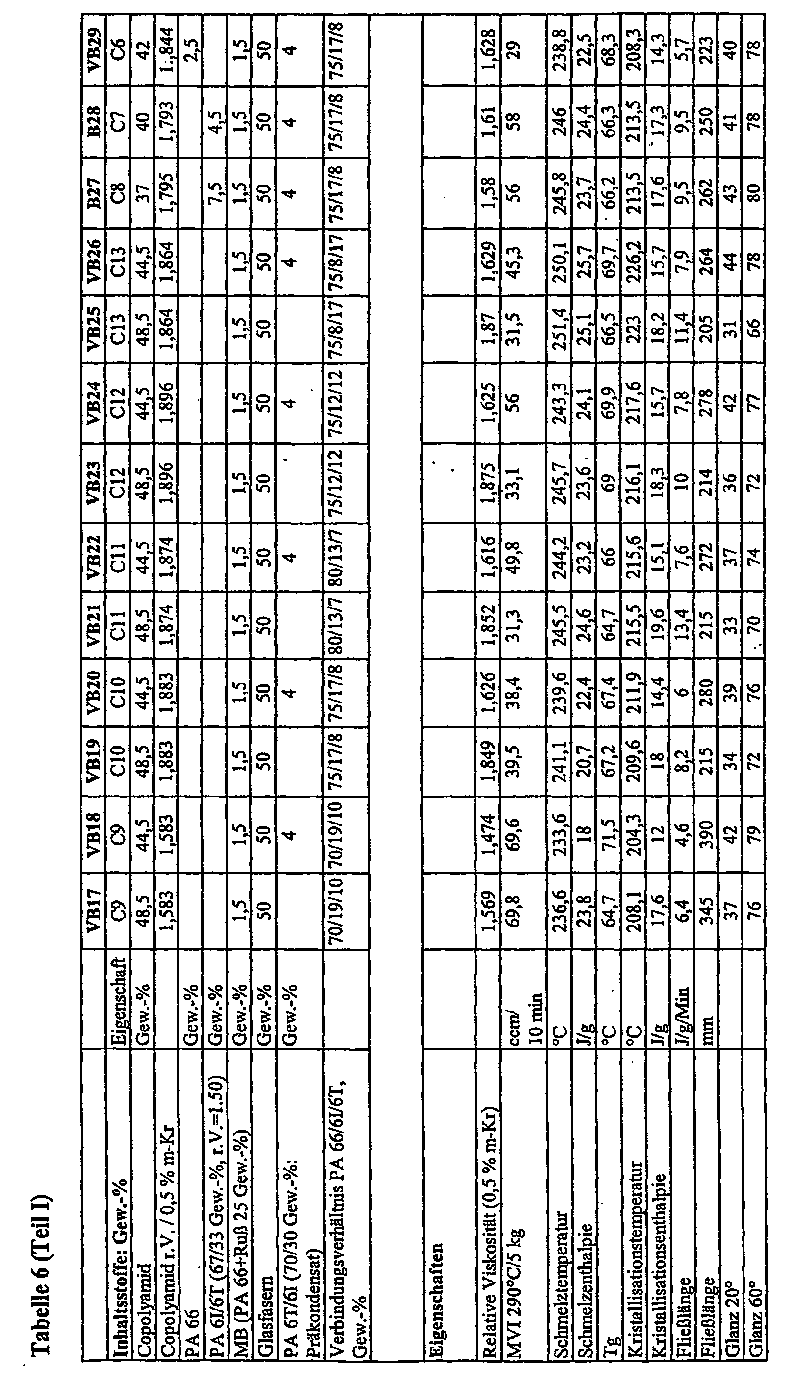

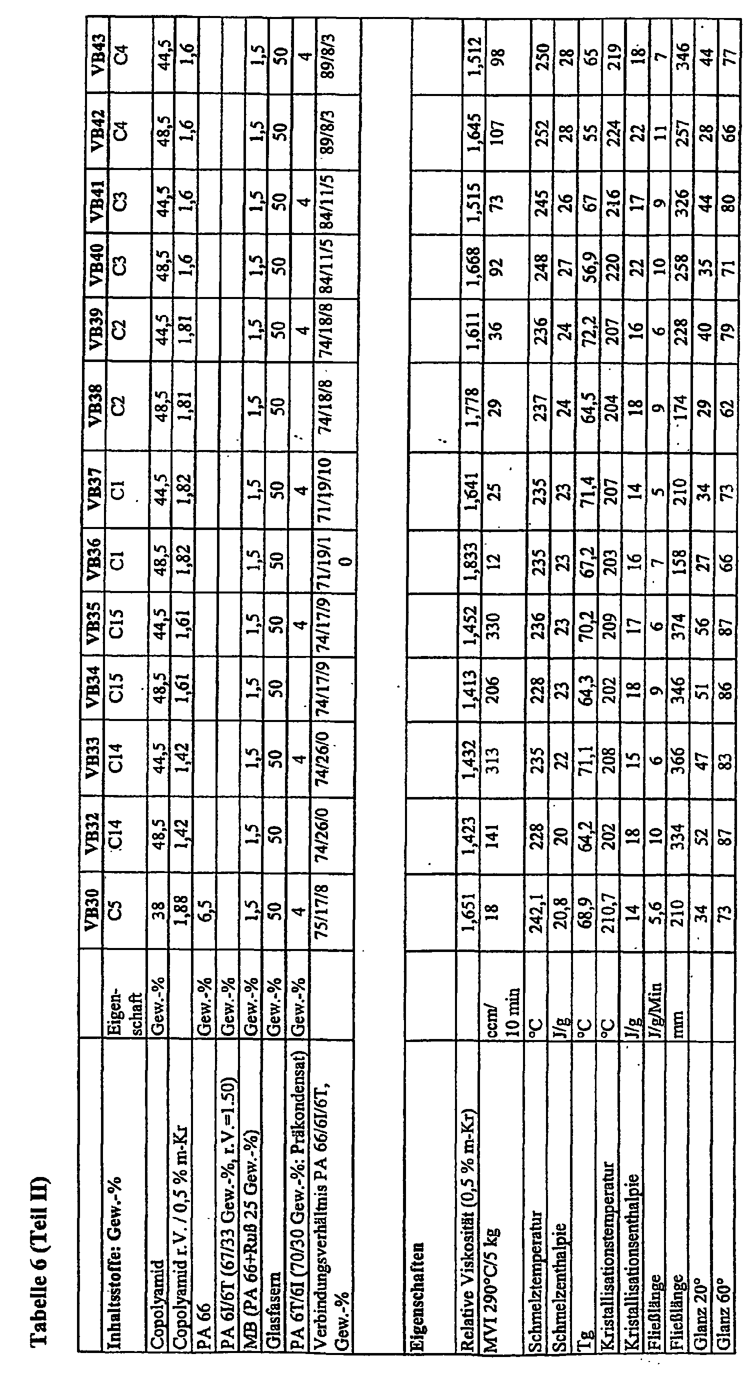

### Messung der Eigenschaften

Die Eigenschaften mit der Kennzeichnung "cond" wurden an konditionierten Prüfkörpern gemessen. Die Konditionierung wurde nach ISO1110 durchgeführt. Alle übrigen Eigenschaften wurden an trockenen Prüfkörpern bestimmt.

Die Messung der thermischen Daten wurde am getrockneten Granulat (24 Stunden, 120° C) durchgeführt, in einem Perkin Elmer DSC-Gerät mit Aufheizgeschwindigkeiten von 20° C/min und Abkühlgeschwindigkeiten von 5° C/min.

Die Schmelztemperatur wurde gemäß ISO 3146-C gemessen. Kristallisationstemperatur, Kristallisationsenthalpie und Kristallisationsgeschwindigkeit wurden im ersten Abkühlzyklus (5°C/min) bestimmt. Zur Bestimmung der Glasumwandlungstemperatur Tg wird die Probe auf Tg+20° C aufgeheizt und abgeschreckt anschließend wird im zweiten Aufheizzyclus 20° C/min) gemessen.

Die mechanischen Eigenschaften E-Modul, Reißfestigkeit, und Reißdehnung wurden durch Zugprüfung an Norm-Prüfkörpern gemäß ISO 527 bestimmt.

Die Messung der Schlagzähigkeit (SZ) und Kerbschlagzähigkeit (KSZ) wurde nach Charpy bei 23°C gemäß ISO 179eU und ISO 179eA durchgeführt.

Die Bestimmung des HDT/A (1,8 MPa) und HDT/C (8 MPa) wurde nach ISO 75 gemessen.

Die Fließlängen wurden in einer Spiralform 1,5X10 mm und 1000 bar bestimmt.

Die Glanzmessungen wurden mit einem Minolta-Farbmeßgerät an Farbplättchen mit 3mm Dicke durchgeführt.

## Patentansprüche

1. Teilaromatische, teilkristalline thermoplastische Polyamid-Formmassen, die als Polyamidmatrix mindestens drei der folgenden Komponenten (A), (B), (C) enthalten:
(A)42-98Gew.-% eines teilkristallinen Copolyamids aufgebaut aus
(a₁) 47-90 Gew.-% Einheiten, welche sich von Adipinsäure in Kombination mit Hexamethylendiamin in nahezu äquimolarem Verhältnis oder von Caprolactam und/oder von ω-Aminocarbonsäuren mit 6 C-Atomen ableiten,
(a₂) 50-7 Gew.-% Einheiten, die sich von Isophthalsäure in Kombination mit Hexamethylendiamin in nahezu äquimolarem Verhältnis ableiten,
(a₃) 40-3 Gew.-% Einheiten, die sich von Terephthalsäure in Kombination mit Hexamethylendiamin in nahezu äquimolarem Verhältnis ableiten,
wobei die Gew.-% der Komponenten (a₁) bis (a₃) zusammen 100% vergeben;
(B) 9-1 Gew.-% präpolymere Polyamide mit einer Lösungsviskosität (ηrel.) von 1,01-1,30, gemessen 0,5 % in m-Kresol, aufgebaut aus
(b₁) 40-90 Gew.-% Einheiten, welche sich von Terephthalsäure in Kombination mit Hexamethylendiamin in nahezu äquimolarem Verhältnis ableiten,
(b₂) 50-10 Gew.-% Einheiten, welche sich von Isophthalsäure in Kombination mit Hexamethylendiamin in nahezu äquimolarem Verhältnis ableiten,
(b₃) 0-50 Gew.-% Einheiten, welche sich von Adipinsäure in Kombination mit Hexamethylendiamin in nahezu äquimolarem Verhältnis oder von Caprolactam und/oder von ω-Aminocarbonsäuren mit 6 C-Atomen ableiten,
wobei die Gew.-% der Komponenten (b₁) bis (b₃) zusammen 100 % ergeben,
(C)49-1 Gew.-% eines amorphen Copolyamids, aufgebaut aus
(c₁) 40-90 Gew.-% Einheiten, welche sich von Isophthalsäure in Kombination mit Hexamethylendiamin in äquimolarem Verhältnis ableiten,
(c₂) 50-10 Gew.-% Einheiten, welche sich von Terephthalsäure in Kombination mit Hexamethylendiamin in äquimolarem Verhältnis ableiten,
(c₃) 0-50 Gew.-% Einheiten, welche sich von Adipinsäure in Kombination mit Hexamethylendiamin in nahezu äquimolarem Verhältnis oder von Caprolactam und/oder von ω-Aminocarbonsäuren mit 6 C-Atomen ableiten,
wobei die Gew.-% der Komponenten (c₁) bis (c₃) zusammen 100 % ergeben;
und weitere Zusätze (D), (E) und (F) in den Formmassen enthalten sein können:
(D)0-70 Gew.-% eines Faser- oder teilchenförmigen Füll- und/oder Verstärkungsstoffs oder Mischungen davon,
(E) 0-6 Gew.-% Ruß,
(F) 0-30 Gew.-% übliche Zusatzstoffe und Verarbeitungshilfsmittel, wobei die Gewichtsprozente der Komponenten (A) bis (F) zusammen 100 % ergeben.

2. Polyamid-Formmassen nach Anspruch 1, die als Polymermatrix mindestens drei der folgenden Komponenten (A), (B), (C) enthalten:
51-94 Gew.-% teilkristallines Copolyamid (A),
1-9 Gew.-% präpolymere Polyamide (B),
5-40 Gew.-% amorphes Polyamid (C),
und zusätzlich die folgenden Komponenten in den Formmassen enthalten sein können:
(D) 0-70 Gew.-% eines faser- oder teilchenförmigen Füll- und/oder Verstärkungsstoffes und/oder Mischungen davon,
(E) 0-6 Gew.-% Ruß,
(F) 0-30 Gew.-% übliche Zusatzstoffe und Verarbeitungshilfsmittel, wobei die Gewichtsprozente der Komponenten (A) bis (F) zusammen 100 % ergeben.

3. Polyamid-Formmassen nach Anspruch 1 bis 2, in denen das Copolyamid (A) zur Einstellung der relativen Viskosität (µrel.) im Bereich von 1,4-1,9, gemessen in 0,5 % m-Kresol, und das Copolyamid (C) im Bereich von 1,35-1,7, gemessen in 0,5 % m-Kresol, Regler enthält, die ausgewählt sind aus der Gruppe der Monoamine mit der allgemeinen Formel CH₃-(R₁)-NH-(R₂)-CH₃, worin R₁ und R₂ jeweils unabhängig von einander 0 bis 36 CH₂-Gruppen bedeuten, besonders bevorzugt aus der Gruppe aus Stearylamin, Cyclohexylamin, Anilin, Propylamin und Nonylamin, und/oder aus der Gruppe der Monocarbonsäuren mit der allgemeinen Formel CH₃-(R₁)-COOH, worin R₁ 0 bis 36 CH₂-Gruppen bedeuten und besonders bevorzugt aus der Gruppe aus Ameisensäure, Stearinsäure, Palmitinsäure, Cyclohexancarbonsäure, Essigsäure, Benzoesäure und/oder der Gruppe der 4-Amino-2,2,6,6-tetraalkylpiperidine, der 2,6-Dialkylphenole oder Gemischen der vorgenannten Verbindungen.

4. Polyamid-Formmassen nach Anspruch 3, in denen das Copolyamid (A) 0,5-5 Mol-% Regler, bezogen auf 100 Mol-% Diamin, enthält.

5. Polyamid-Formmassen nach einem der Ansprüche 1-4, in denen das teilkristalline Copolyamid (A) und/oder das präpolymere Polyamid (B) und/oder das amorphe Copolyamid (C) katalytisch wirksame Verbindungen auf Basis von unterphosphoriger Säure, phosphoriger Säure oder Phosphorsäure in Mengen von 10-500 mg/kg enthält sowie gegebenenfalls Antioxidantien aus der Gruppe der sterisch gehinderten Hydroxyphenole oder HALS-Stabilisatoren in Mengen von 0,05-5 Gew.-%, bezogen auf den Polymerisationsansatz der jeweiligen Polyamide (A), (B), (C).

6. Polyamid-Formmassen nach einem der vorhergehenden Ansprüche 1-5, in denen im Polymerisationsansatz für das teilkristalline Copolyamid (A) und/oder dem Polymerisationsansatz der präpolymeren Polyamide (B) und/oder dem Polymerisationsansatz für das amorphe Copolyamid (C) Entschäumer auf der Basis von Silikonen und Silikonderivaten enthalten sind, wobei insbesondere die Silikone und Silikonderivate in stabiler wässeriger Emulsion mit Kieselsäuren in Konzentrationen von 10-500 ppm vorliegen.

7. Polyamid-Formmassen nach den Ansprüchen 1-6, in denen im Polymerisationsansatz für die Polyamidkomponenten (A) und/oder (B) und/oder (C) Zusatzstoffe aus der Gruppe der Schichtsilikate, insbesondere Montmorillonit, Bentonit, Glimmer enthalten sind, die in ausgeschieferter Form im Endprodukt vorliegen.

8. Polyamid-Formmassen nach einem der vorhergehenden Ansprüche 1-6, in denen direkt bei der Extrusion der Formmasse Zusätze aus der Gruppe der Schichtsilikate, insbesondere Montmorillonit, Bentonit oder Glimmer eingesetzt werden.

9. Polyamid-Formmassen nach den Ansprüchen 1-8, in denen im Polymerisationsansatz für die Polyamide (A) und/oder (B) und/oder (C) Trenn- und Gleitmittel, insbesondere Glycerinmonostearate, enthalten sind.

10. Polyamid-Formmassen nach einem der vorhergehenden Ansprüche 1-9, in denen das Copolyamid (A) eine relative Viskosität, gemessen in 0,5 %iger m-Kresol-Lösung, von zwischen 1,4 und 1,9, bevorzugt von 1,4 und 1,8, besonders bevorzugt zwischen 1,4 und 1,7 aufweist.

11. Polyamid-Formmassen nach einem der vorhergehenden Ansprüche 1-10, in denen das präpolymere Polyamid (B) eine relative Viskosität von 1,01-1,3, bevorzugt von 1,05-1,25, gemessen in 0,5 %iger m-Kresol-Lösung, aufweist.

12. Polyamid-Formmassen nach den Ansprüchen 1-10, in denen das amorphe Copolyamid (C) eine relative Viskosität von zwischen 1,35 und 1,70, insbesondere von zwischen 1,35 und 1,55, gemessen in 0,5 % m-Kresol, aufweist.

13. Polyamid-Formmassen nach den Ansprüchen 1-12, in denen Verstärkungsstoffe in Anteilen von 0-70 Gew.-%, vorzugsweise in Anteilen von 30-70 Gew.-%, bezogen auf die Gesamtformmasse, vorhanden sind.

14. Polyamid-Formmassen nach Anspruch 13, in denen die Verstärkungsstoffe ausgewählt sind aus der Gruppe der Glasfasern, Glas-Rovings, Glaskugeln, Glaspulver, Polymerfasern, Kohlenstoffasern, Metallfasern, Mineralstoffen wie Talkum, Kaolin, Wollastonit oder der Schichtsilikate.

15. Polyamid-Formmassen nach Anspruch 1 oder 2, in denen der Ruß ausgewählt ist aus der Gruppe von Black Pearls 880^{®} oder Corax N115^{®}.

16. Polyamid-Formmassen nach den Ansprüchen 1-15, in denen die üblichen Zusatz- und Verarbeitungsmittel (F) aus der Gruppe aus Stabilisatoren, Gleitmittel, Farbstoffe, Metallsplitter, metallischen Pigmenten, gestanzten Metallsplittern, Flammschutzmitteln, Schlagzähmodifikatoren, Antistatika, Leitfähigkeitsadditiven, Antibeschlagmitteln, Entformungsmitteln, optischen Aufhellern, Duftstoffen oder Gemischen davon ausgewählt sind.

17. Polyamid-Formmassen nach den Ansprüchen 1-16, die 0-6 Gew.-% Ruß und 2-6 Gew.-% Polyamid 12 enthalten.

18. Verwendung der Polyamid-Formmassen gemäß den Ansprüchen 1-17 zur Herstellung von Formkörpern, Hohlkörpern, Folien und Fasern.

19. Formkörper, erhältlich aus den Polyamid-Formmassen gemäß einem oder mehreren der Ansprüche 1-17.

## Claims

1. Semi-aromatic semi-crystalline thermoplastic polyamide moulding materials comprising at least three of the following components (A), (B), (C) as polyamide matrix:
(A)42 - 98 wt.-% of a semi-crystalline copolyamide formed by
(a₁) 47 - 90 wt.-% of units derived from adipic acid in combination with hexamethylene diamine in nearly equimolar ratio or from caproplactam and/or from ω-amino acids having 6 C atoms,
(a₂) 50 - 7 wt.-% of units derived from isophthalic acid in combination with hexamethylene diamine in nearly equimolar ratio,
(a₃) 40 - 3 wt.-% of units derived from terephthalic acid in combination with hexamethylene diamine in a nearly equimolar ratio, the wt-% of the components (a₁) to (a₃) making up together 100 %;
(B)9 - 1 wt.-% of prepolymeric polyamides having a solution viscosity (η_{rel.}) of 1.01-1.30, as measured in 0.5 % m-cresol, formed by
(bis) 40 - 90 wt.-% of units derived from terephthalic acid in combination with hexamethylene diamine in nearly equimolar ratio,
(b₂) 50 - 10 wt.-% of units derived from isophthalic acid in combination with hexamethylene diamine in nearly equimolar ratio,
(b₃) 0-50 wt.-% of units derived from adipic acid in combination with hexamethylene diamine in nearly equimolar ratio or from caproplactam and/or from ω-amino acids having 6 C atoms,
the wt.-% of the components (b₁) to (b₃) making up together 100 %;
(C)49 - 1 wt.-% of an amorphous copolyamide formed by
(c₁) 40 - 90 wt.-% of units derived from isophthalic acid in combination with hexamethylene diamine in equimolar ratio,
(c₂) 50 - 10 wt.-% of units derived from terephthalic acid in combination with hexamethylene diamine in equimolar ratio,
(c₃) 0 - 50 wt.-% of units derived from adipic acid in combination with hexamethylene diamine in nearly equimolar ratio or from caproplactam and/or from ω-amino acids having 6 C atoms,
the wt.-% of the components (cm) to (c₃) making up together 100 %;
and wherein further additives (D), (E) and (F) can be comprised in the moulding materials:
(D)0 - 70 wt.-% of a fibrous or particle type filling material and/or reinforcing material or mixtures thereof,
(E) 0 - 6 wt.-% of carbon black,
(F) 0-30 wt.-% of usual additives and processing aid agents,
wherein the weight percentages of the components (A) to (F) make up together 100 %.

2. Polyamide moulding materials according to claim 1, comprising at least three of the following components (A), (B), (C) as polymer matrix:
51 - 94 wt.-% of semi-crystalline copolyamide (A),
1-9 wt.-% of prepolymeric polyamides (B),
5-40 wt.-% of amorphous polyamide (C),
and wherein additionally the following components can be comprised in the moulding materials:
(D) 0 - 70 wt.-% of a fibrous or particle type filling or reinforcing material or mixtures thereof,
(E) 0 - 6 wt.-% of carbon black,
(F) 0 - 30 wt.-% of usual additives and processing aid agents,
wherein the weight percentages of the components (A) to (F) make up together 100 %.

3. Moulding materials according to claim 1 or 2, wherein the copolyamide (A) to set-up the relative viscosity (η_{rel.}), as measured in 0.5 % m-cresol, in the range of 1.4-1.9, and the copolymide (C) to set-up the relative viscosity (η_{rel.}), as measured in 0.5 % m-cresol, in the range of 1.35-1.7, contain regulators or modifiers selected from the group of the monoamines having the general formula CH₃-(R₁)-NH-(R₂)-CH₃, wherein R₁ and R₂, each independently from each other, mean 0 to 36 CH₂-groups, preferably from the group of stearamine, cyclohexylamine, aniline, propylamine and nonylamine and/or from the group of the monocarboxylic acids having the general formula CH₃-(R₁)-COOH, wherein R₁ means 0 to 36 CH₂-groups, preferably from the group of formic acid, stearic acid, palmitic acid, cyclohexanecarboxylic acid, acetic acid, benzoic acid and/or from the group of the 4-amino-2,2,6,6-tetraalkylpiperidines, the 2,6-dialkylphenols or mixtures of the afore-mentioned compounds.

4. Polyamide moulding materials according to claim 3, wherein the copolyamide (A) comprises 0.5-5 mol-% of regulator or modifier, based on 100 mol-% of diamine.

5. Polyamide moulding materials according to any of claims 1-4, wherein the semi-crystalline polyamide (A) and/or the prepolymeric polyamide (B) and/or the amorphous copolyamide (C) comprises catalytically active compounds on the basis of hypophosphorous acid, phosphorous acid or phosphoric acid in amounts of 10-500 mg/kg and, if required, antioxidants from the group of the sterically hindered hydroxyphenols or HALS stabilizers in amounts of 0.05-5 wt.-% based on the polymerization operation of the respective polyamides (A), (B), (C).

6. Polyamide moulding materials according to any of the preceding claims 1-5, wherein antifoaming agents on the basis of silicones and silicone derivates are comprised in the polymerization operation of the semi-crystalline copolymide (A) and/or the polymerization operation of the prepolymeric polyamides (B) and/or the polymerization operation of the copolyamide (C) wherein especially the silicones and silicone derivates are present in stable aqueous emulsion with silicic acids in concentrations of 10 - 500 ppm.

7. Polyamide moulding materials according to claims 1-6, wherein additives from the group of layered silicates, specially montmorillonite, bentonite, mica being present in exfoliated form in the final product are comprised in the polymerization operation of the polyamide components (A) and/or (B) and/or (C).

8. Polyamide moulding materials according to any of claims 1-6, wherein additives from the group of layered silicates, in particular, montmorillonite, bentonite or mica are used directly during the extrusion of the moulding materials.

9. Polyamide moulding materials according to claims 1-8, wherein release agents and lubricants, in particular, glycerol monostearates, are comprised in the polymerization operation of the polyamides (A) and/or (B) and/or (C).

10. Polyamide moulding materials according to any of the preceding claims 1-9 wherein the copolyamide (A) has a relative viscosity, as measured in solution of 0.5 % of m-cresol, of between 1.4 and 1.9, preferably 1.4 and 1.8, especially preferred between 1.4 and 1.7.

11. Polyamide moulding materials according to any of the preceding claims 1-10, wherein the prepolymeric polyamide (B) has a relative viscosity, as measured in 0.5 % solution of m-cresol, of 1.01-1.3, preferably 1.05-1.25.

12. Polyamide moulding materials according to claims 1-10, wherein the amorphous copolyamide (C) has a relative viscosity, as measured in 0.5 % solution of m-cresol, of between 1.35 and 1.70, preferably between 1.35 and 1.55.

13. Polyamide moulding materials according to claims 1-12, wherein reinforcing materials are comprised in amounts of 0 - 70 wt.-% , preferably in amounts of 30 - 70 wt.-%, based on the total moulding material.

14. Polyamide moulding materials according to claim 13, wherein the reinforcing materials are selected from the group of glass fibres, glass rovings, glass globes, glass powders, polymer fibres, carbon fibres, metal fibres, mineral aggregates such as talcum, kaolin, wollastonite or of the layered silicates.

15. Polyamide moulding materials according to claim 1 or 2, wherein the carbon black is selected from the group of Black Pearls 880^{®} or Corax N115^{®}.

16. Polyamide moulding materials according to claims 1-15, wherein the usual additives and processing agents (F) are selected from the group of stabilizers, lubricants, dyes, metal splinters, metal pigments, stamped metal splinters, flame retardants, impact-resistant modifiers, antistaticas, conductive additives, anti-tarnishing agents, mould release agents, optical brightening agents, aromatics or mixtures thereof.

17. Polyamide moulding materials according to any of claims 1-16, comprising 0-6 wt.-% of carbon black and 2-6 wt.-% of polyamide 12.

18. Use of the polyamide moulding materials according to claims 1-17 for production of moulded articles, hollow parts, sheets and fibres.

19. Moulded article, obtainable from the polyamide moulding materials according to one or more of the claims 1-17.

## Revendications

1. Matières moulables de polyamide qui sont thermoplastiques, partiellement aromatiques et partiellement cristallines, lesdites matières contenant, en tant que matrice de polyamide, au moins trois des composants suivants (A), (B), (C) :
(A) 42 à 98 % en poids d'un copolyamide partiellement cristallin qui est constitué de
(a₁) 47 à 90 % en poids d'unités dérivées d'acide adipique en combinaison avec de l'hexaméthylènediamine, leur rapport étant quasiment équimolaire, ou bien de caprolactame et/ou d'acides carboxyliques ω-aminés renfermant 6 atomes de carbone,
(a₂) 50 à 7 % en poids d'unités dérivées d'acide isophtalique en combinaison avec de l'hexaméthylènediamine, leur rapport étant quasiment équimolaire,
(a₃) 40 à 3 % en poids d'unités dérivées d'acide isophtalique en combinaison avec de l'hexaméthylènediamine, leur rapport étant quasiment équimolaire,
la somme des % en poids des composants (a₁) à (a₃) s'élevant à 100 % ;
(B) 9 à 1 % en poids de polyamides prépolymères dont la viscosité de solvant (ηrel.), mesurée dans du m-crésol à 0,5 %, est comprise entre 1,01 et 1,30, lesdits prépolymères étant constitués de
(b₁) 40 à 90 % en poids d'unités dérivées d'acide téréphtalique en combinaison avec de l'hexaméthylènediamine, leur rapport étant quasiment équimolaire,
(b₂) 50 à 10 % en poids d'unités dérivées d'acide isophtalique en combinaison avec de l'hexaméthylènediamine, leur rapport étant quasiment équimolaire,
(b₃) 0 à 50 % en poids d'unités dérivées d'acide adipique en combinaison avec de l'hexaméthylènediamine, leur rapport étant quasiment équimolaire, ou bien de caprolactame et/ou d'acides carboxyliques ω-aminés renfermant 6 atomes de carbone,
la somme des % en poids des composants (b₁) à (b₃) s'élevant à 100 % ;
(C) 49 à 1 % en poids d'un copolyamide amorphe qui est constitué de
(c₁) 40 à 90 % en poids d'unités dérivées d'acide isophtalique en combinaison avec de l'hexaméthylènediamine, leur rapport étant quasiment équimolaire,
(c₂) 50 à 10 % en poids d'unités dérivées d'acide téréphtalique en combinaison avec de l'hexaméthylènediamine, leur rapport étant quasiment équimolaire,
(c₃) 0 à 50 % en poids d'unités dérivées d'acide adipique en combinaison avec de l'hexaméthylènediamine, leur rapport étant quasiment équimolaire, ou bien de caprolactame et/ou d'acides carboxyliques ω-aminés renfermant 6 atomes de carbone,
la somme des % en poids des composants (c₁) à (c₃) s'élevant à 100 % ;
et lesdites matières moulables pouvant contenir d'autres additifs (D), (E) et (F) :
(D) 0 à 70 % en poids d'une charge et/ou d'une charge renforçante sous forme de fibres ou de particules, les différents types pouvant être mélangés,
(E) 0 à 6 % en poids de noir de carbone,
(F) 0 à 30 % en poids d'additifs usuels et d'agents auxiliaires de procédé, la somme des pourcentages en poids des composants (A) à (F) s'élevant à 100 %.

2. Matières moulables de polyamide selon la revendication 1, les dites matières contenant, en tant que matrice de polyamide, au moins trois des composants suivants (A), (B), (C) :
51 à 94 % en poids d'un copolyamide partiellement cristallin (A),
1 à 9 % en poids d'un polyamide prépolymère (B),
5 à 40 % en poids d'un polyamide amorphe (C),
et lesdites matières moulables pouvant contenir, en outre, les composants suivants :
(D) 0 à 70 % en poids d'une charge et/ou d'une charge renforçante sous forme de fibres ou de particules, les différents types pouvant être mélangés,
(E) 0 à 6 % en poids de noir de carbone,
(F) 0 à 30 % en poids d'additifs usuels et d'agents auxiliaires de procédé,
la somme des pourcentages en poids des composants (A) à (F) s'élevant à 100 %.

3. Matières moulables de polyamide selon les revendications 1 à 2 au sein desquelles ledit copolyamide (A) contient des agents de régulation pour établir la viscosité relative (µrel.), mesurée dans m-crésol à 0,5 %, dans une fourchette allant de 1,4 à 1,9 et ledit copolyamide (C) en contient pour l'établir dans une fourchette allant de 1,35 à 1,7 %, mesurée dans du m-crésol à 0,5 %, lesdits agents de régulations étant choisis dans le groupe des monoamines répondant à la formule générale CH₃-(R₁)-NH-(R₂)-CH₃ dans laquelle chacun des symboles R₁ et R₂ représente, de façon indépendante, un nombre de groupements CH₂ compris entre 0 et 36, le choix se faisant avec une préférence particulière dans le groupe constitué de la stéarylamine, la cyclohexylamine, l'aniline, la propylamine et la nonylamine, et/ou dans le groupe des acides monocarboxyliques répondant à la formule générale CH₃-(R₁)-COOH dans laquelle R₁ représente un nombre de groupements CH₂ compris entre 0 et 36, le choix se faisant avec une préférence particulière dans le groupe constitué de la acide formique, l'acide stéarique, l'acide palmitique, l'acide cyclohexanoïque, l'acide acétique, l'acide benzoïque, et/ou dans le groupe des 4-amino-2,2,6,6-tétraalkylpipéridines, des 2,6-dialkylphénols ou de mélanges entre les composés précités.

4. Matières moulables de polyamide selon la revendication 3 au sein desquelles ledit copolyamide (A) contient 0,5 à 5 % molaires d'agents de régulation, par rapport à 100 % molaires de diamine.

5. Matières moulables de polyamide selon l'une des revendications 1 à 4 au sein desquelles ledit copolyamide partiellement cristallin (A) et/ou ledit polyamide prépolymère (B) et/ou ledit copolyamide amorphe (C) contient/contiennent, dans une quantité comprise entre 10 et 500 mg/kg, des composés à action catalytique à base d'acide hypophosphoreux, d'acide phosphoreux ou d'acide phosphorique ainsi que, le cas échéant et dans une quantité comprise entre 0,5 et 5 % en poids, des antioxydants issus du groupe des hydroxyphénols stériquement encombrés ou des agents stabilisateurs de type HALS, les indications se rapportant au mélange de polymérisation des polyamides (A), (B), (C) concernés.

6. Matières moulables de polyamide selon l'une des précédentes revendications 1 à 5 au sein desquelles le mélange de polymérisation destiné au copolyamide partiellement cristallin (A) et/ou le mélange de polymérisation des polyamides prépolymères (B) et/ou le mélange de polymérisation destiné au copolyamide amorphe (C) contient/contiennent des agents anti-mousse à base de silicones et de dérivés de silicone, s'agissant notamment de silicones et de dérivés de silicone formant une émulsion aqueuse stable avec des acides siliciques dans une concentration comprise entre 10 à 500 ppm.

7. Matières moulables de polyamide selon les revendications 1 à 6 au sein desquelles le mélange de polymérisation destiné au composant (A) et/ou (B) et/ou (C) du polyamide contient des additifs issus du groupe des phyllosilicates, s'agissant notamment de la montmorillonite, de la bentonite, du mica, le produit fini contenant lesdits additifs sous forme de feuillets.

8. Matières moulables de polyamide selon l'une des précédentes revendications 1 à 6, lesdits additifs issus du groupe des phyllosilicates, s'agissant notamment de la montmorillonite, de la bentonite ou du mica, étant mis en oeuvre directement lors de l'extrusion de la matière moulable.

9. Matières moulables de polyamide selon les revendications 1 à 8 au sein desquelles le mélange de polymérisation destiné aux polyamides (A) et/ou (B) et/ou (C) contient des agents de séparation et de lubrification, s'agissant notamment de monostéarates de glycérol.

10. Matières moulables de polyamide selon l'une des précédentes revendications 1 à 9 au sein desquelles ledit copolyamide (A) présente une viscosité relative, mesurée dans une solution de m-crésol à 0,5 %, comprise entre 1,4 et 1,9, de préférence entre 1,4 et 1,8, et avec une préférence particulière entre 1,4 et 1, 7.

11. Matières moulables de polyamide selon l'une des précédentes revendications 1 à 10 au sein desquelles ledit polyamide prépolymère (B) présente une viscosité relative, mesurée dans une solution de m-crésol à 0,5 %, comprise entre 1,01 et 1,3, de préférence entre 1,05 et 1,25.

12. Matières moulables de polyamide selon l'une des précédentes revendications 1 à 10 au sein desquelles ledit copolyamide amorphe (C) présente une viscosité relative, mesurée dans du m-crésol à 0,5 %, comprise entre 1,35 et 1,70, de préférence entre 1,35 et 1,55.

13. Matières moulables de polyamide selon les revendications 1 à 12, contenant des agents renforçants dans proportions comprises entre 0 et 70 % en poids, de préférence dans des proportions comprises entre 30 et 70 % en poids, par rapport à l'intégralité de la matière moulable.

14. Matières moulables de polyamide selon la revendication 13, lesdits agents renforçants étant choisis dans le groupe des fibres de verre, des rovings de verre, des billes de verre, des poudres de verre, des fibres en polymère, des fibres de carbone, des fibres métalliques, des matières minérales telles que le talc, le kaolin, la wollastonite ou des phyllosilicates.

15. Matières moulables de polyamide selon les revendications 1 ou 2 au sein desquelles ledit noir de carbone de choisi dans le groupe constitué de Black Pearls 880^{®} et de Corax N115^{®}.

16. Matières moulables de polyamide selon les revendications 1 à 15 au sein desquelles lesdits additifs usuels et agents auxiliaires de procédé (F) sont choisis dans le groupe des agents stabilisateurs, des agents de lubrification, des colorants, des éclats de métal, des pigments métalliques, des morceaux de métal obtenus par poinçonnage, des agents ignifuges, des agents modificateurs de résilience, des agents antistatiques, des additifs de conductivité, des agents anti-buée, des agents de démoulage, des agents azurants, des parfums ou de mélanges entre les agents précités.

17. Matières moulables de polyamide selon les revendications 1 à 16, contenant 0 à 6 % en poids de noir de carbone et 2 à 6 % en poids de polyamide 12.

18. Utilisation des matières moulables de polyamide selon les revendications 1 à 17 pour fabriquer des corps moulés, des corps creux, des feuilles et des fibres.

19. Corps moulé pouvant être obtenu à partir des matières moulables de polyamide selon une ou plusieurs des revendications 1 à 17.
